# EUROPEAN PATENT SPECIFICATION

(11) **EP 3 878 697 B1**
(45) Date of publication and mention of the grant of the patent: **07.08.2024**
(21) Application number: 19903684.9
(22) Date of filing: 06.12.2019
(51) Int. Cl.: B60R 16/02, B60L 3/00, B60L 3/04, H02J 7/00

(54) **CURRENT CUTOFF SYSTEM**
STROMSPERRSYSTEM
SYSTÈME DE COUPURE DE COURANT

(30) Priority: 25.12.2018 JP 2018240947
(43) Date of publication of application: 15.09.2021
(73) Proprietor: Suncall Corporation, Kyoto-shi, Kyoto 615-8555 (JP)
(72) Inventor: MURAKAMI Kenji, Kyoto-shi Kyoto 615-8555 (JP); MUGISHIMA Akio, Kyoto-shi Kyoto 615-8555 (JP)
(74) Representative: Hoffmann Eitle
(86) International application number: PCT/JP2019/047853
(87) International publication number: WO 2020/137451

(56) References cited:
- EP-A1- 2 811 548
- EP-A1- 3 820 009
- DE-A1- 102012 110 236
- DE-A1- 102012 214 835
- DE-A1- 102017 203 851
- JP-A- 2007 312 491
- JP-A- 2009 120 138
- JP-A- 2013 091 424
- US-A1- 2011 234 127
- US-A1- 2013 017 421
- US-A1- 2018 248 354
- OUAIDA RÉMY ET AL: "Hybrid Protection based on Pyroswitch and Fuse Technologies for DC Applications", 7 June 2016 (2016-06-07), pages 1 - 6, XP055898108, Retrieved from the Internet <URL:http://actes.sge-conf.fr/2016/articles/article_83220.pdf> [retrieved on 20220307]

## Description

### Technical Field

The present invention relates to a current cutoff system, and in particular, a current cutoff system that cuts, by a pyroswitch based on a predetermined condition, a shunt resistor used in measuring the value of current in a current path flowing from a battery for high-voltage applications to a motor that are used in, for example, electric vehicles (EVs), hybrid vehicles (HVs), and plug-in hybrid vehicles (PHVs).

### Background Art

There is known a pyroswitch which cuts off a circuit when a short circuit or an overcurrent is detected in the circuit (for example, see Patent Document 1). This kind of pyroswitch is provided also in vehicles such as electric vehicles (EVs), hybrid vehicles (HVs), and plug-in hybrid vehicles (PHVs).

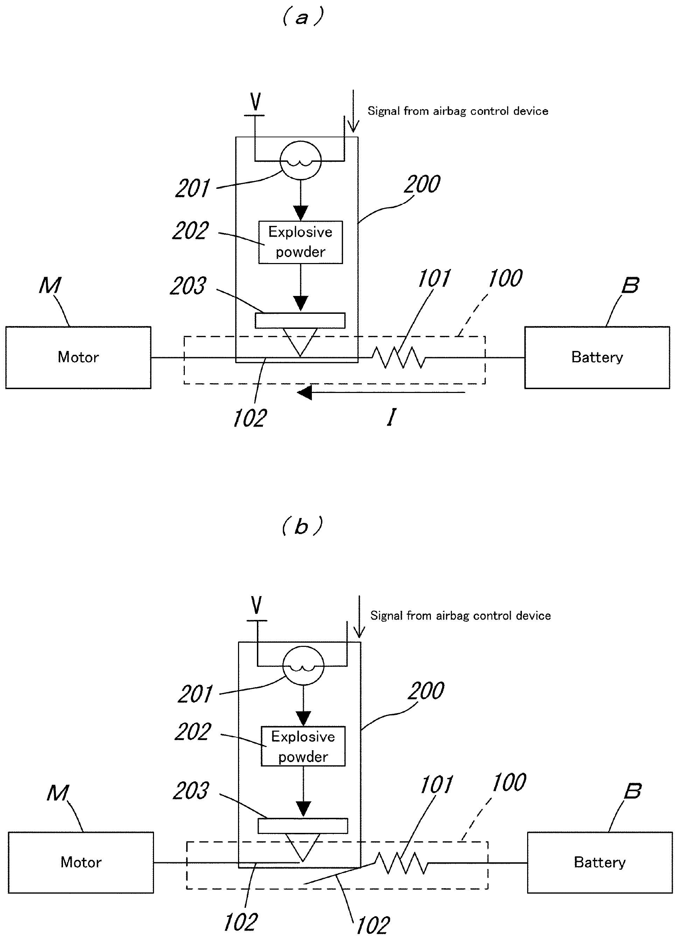

In this regard, the conventional system will be described specifically with reference to FIG. 4. As shown in FIG. 4(a), a shunt resistor 100 used in measuring the current value of current I flowing from a battery B to a motor M that are provided in a vehicle is connected between the battery B and the motor M. The shunt resistor 100 is mainly composed of a resistor 101 and a base member 102 (so-called bus bar) made of a metal such as copper. A pyroswitch 200 is provided on the base member 102 of such a shunt resistor 100 as shown in FIG. 4(a). The pyroswitch 200 is composed of a heater ignition unit 201 for receiving a signal from an airbag control device that operates by detecting a collision at the time of a vehicle accident, explosive powder 202 exploding by activation of the heater ignition unit 201, a cutting unit 203 for cutting the base member 102 of the shunt resistor 100 by the exploded explosive powder 202 as shown in FIG. 4(b). A power supply V for operating the heater ignition unit 201 is connected to the heater ignition unit 201.

By providing the pyroswitch 200 in the vehicle in this way, the wiring of the battery B can be safely disconnected, triggered by a signal from the airbag control device that operates by detecting a collision at the time of a vehicle accident. That is, when damage such as a disconnection or a short circuit of the wiring of the battery B as a result of deformation of the vehicle occurs at the time of a vehicle accident, a large current flows and the possibility of secondary damage such as heat generation and ignition of the wiring and the battery B is increased. However, such a possibility can be prevented by thus providing the pyroswitch 200 and cutting the base member 102 of the shunt resistor 100.

### Citation List

### Patent Document

Patent Document 1: Japanese Translation of International Application (Kohyo) No. 2003-534523

US 2018/248354 A1 discloses a pyrotechnic cutoff switch having a shunt resistor for measuring a value of current flowing from a battery to a load unit, a threshold vale detection unit for detecting whether or not the current value measured by the shunt resistor exceeds a preset threshold, and a pyro switch for cutting a conductive path between the vehicle-mounted power supply and a load when the threshold value is exceeded, a control unit and a communication unit that sends to an ECU information indicating that an electric wire connecting the vehicle-mounted power supply and a load has been protected.

DE 10 2012 214 835 A1 discloses a pyrotechnic switch and an electronic circuit to activate the pyrotechnic switch wherein the electronic circuit is buffered by a charge buffer.

### Summary of the Invention

### Technical Problems

However, when the base member 102 of the shunt resistor 100 is configured to be cut, triggered by a signal from the airbag control device that operates by detecting a collision at the time of a vehicle accident, the pyroswitch 200 is operated when receiving a signal from the airbag control device even if damage such as a disconnection and a short circuit of the wiring of the battery B does not occur at the time of a vehicle accident, so that the base member 102 of the shunt resistor 100 is cut. As a result, there is a problem that electric power is not supplied to the motor M, etc., due to the loss of the entire power source supplied from the battery B, whereby, for example, the door of the vehicle cannot be opened and thus an occupant cannot get out of the vehicle.

Further, there is a problem that a signal from the airbag control device is damaged at the time of a vehicle accident and then the pyroswitch 200 is not operated and the wiring of the battery B cannot be safely disconnected.

Moreover, the signal from the airbag control device cannot be received when a break occurs in the wiring between the heater ignition unit 201 and the signal from the airbag control device, so that the pyroswitch 200 is not operated. Thus, there is a problem that the wiring of the battery B cannot be safely disconnected. Further, there is a problem that such a state cannot be detected.

Accordingly, in view of the foregoing problems, an object of the present invention is to provide a current cutoff system capable of disconnecting the wiring of a battery more safely using a pyroswitch.

### Solution to the Problems

The present invention is defined in the appended claim. It is noted that signs in parentheses are reference signs of an embodiment to be described later, but the present invention should not be limited thereto.

### Advantageous Effects of the Invention

Next, advantageous effects of the present invention will be described with reference signs in the drawings. It is noted that signs in parentheses are reference signs of an embodiment to be described later, but the present invention should not be limited thereto.

The current cutoff system is configured such that the threshold value detection unit (10) detects whether or not the current value measured by the shunt resistor (100) for measuring the value of the current flowing from the battery (B) to the load unit (for example, the motor M) exceeds the preset threshold value and when the threshold value detection unit (10) detects that the threshold value has been exceeded, the shunt resistor (100) is cut by the pyroswitch (200). As a result, it is not possible to operate the pyroswitch (200) when no damage such as a disconnection and a short circuit of the wiring of the battery (B) occurs. Therefore, the problem can be solved that electric power for the motor (M) cannot be obtained from the battery (B), whereby the door of the vehicle cannot be opened and thus an occupant cannot get out of the vehicle. Further, since the threshold value detection unit (10) detects that the current value measured by the shunt resistor (100) has exceeded the threshold value, the threshold value detection unit (10) is preferably located in the vicinity of the shunt resistor (100), and since the shunt resistor (100) is cut by the pyroswitch (200), the pyroswitch (200) is preferably located in the vicinity of the shunt resistor (100). Accordingly, the threshold value detection unit (10) is preferably provided in the vicinity of the pyroswitch (200). As a result, signal wiring indicating that the current value measured by the shunt resistor (100) has exceeded the threshold value is preferably located in the vicinity of the pyroswitch (200). Thus, the situation where the signal from the airbag control device is damaged at the time of a vehicle accident as in the conventional case can be reduced.

Thus, according to the present invention, the wiring of the battery can be disconnected more safely using the pyroswitch.

The current cutoff system is configured such that the monitoring unit (11) monitors the electrical connection state between the threshold value detection unit (10) and the pyroswitch (200) and the transmission unit (for example, the CAN communication unit 12) transmits the monitored content to the vehicle ECU. As a result, the electrical connection state can be constantly monitored, so that it is possible to confirm whether or not a break occurs. This can solve the problem that the pyroswitch (200) does not operate without noticing the occurrence of a break as in the conventional case, and thus the wiring of the battery (B) can be disconnected more safely. Further, the occurrence of a break in the vehicle ECU can be detected at an early stage by transmitting the monitored content to the vehicle ECU that controls each part of the vehicle, and thus, the occurrence of a problem can be notified at an early stage.

### Brief Description of the Drawings

FIG. 1 is a conceptual block diagram showing a system according to an embodiment of the present invention.
FIG. 2(a) is a conceptual block diagram showing a part of the system according to the same embodiment, and in particular, showing a state after a pyroswitch is operated, and FIG. 2(b) is a conceptual block diagram showing a part of the system according to the same embodiment, and in particular, explaining a method for suppressing energy generated after the pyroswitch is operated.
FIG. 3 is a flowchart showing an example of use of the system according to the same embodiment.
FIG. 4 shows a conventional system, and FIG. 4(a) is a conceptual block diagram showing a state before a pyroswitch is operated, and FIG. 4(b) is a conceptual block diagram showing a state after the pyroswitch is operated. Description of the Embodiment

Hereinafter, an embodiment of a system according to the present invention will be specifically described with reference to the drawings. It is noted that, in the following description, up/down and left/right directions shall be referred to as up/down and left/right directions when viewed from the front of the figure. Further, the same members as those of the conventional system are denoted by the same reference signs and their detailed description will be omitted.

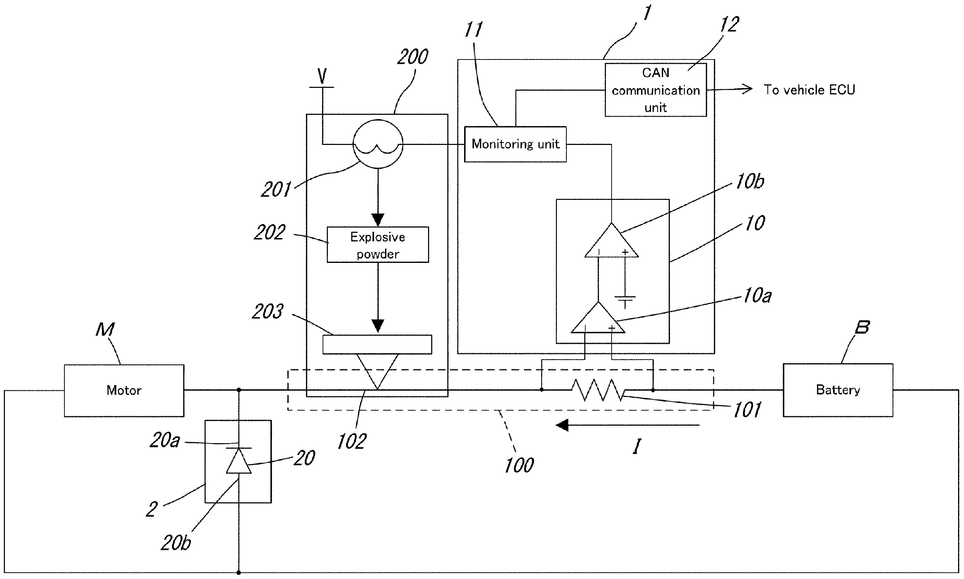

As shown in FIG. 1, the system according to the present embodiment is composed of a current detection sensor 1, a suppression unit 2, a shunt resistor 100 provided between a battery B and a motor M and measuring the current value of current I flowing from the battery B to the motor M, and a pyroswitch 200 provided on a base member 102 of the shunt resistor 100.

As shown in FIG. 1, the current detection sensor 1 is composed of a threshold value detection unit 10, a monitoring unit 11, and a CAN communication unit 12. The threshold value detection unit 10 is composed of an amplifier 10a for amplifying the current value of the current I flowing from the battery B to the motor M having been measured by the shunt resistor 100 and a comparator 10b for detecting whether or not the current value amplified by the amplifier 10a exceeds a preset threshold value (for example, 2000A). The output of the comparator 10b and a heater ignition unit 201 of the pyroswitch 200 are electrically connected. Unlike the conventional case, the pyroswitch 200 is operated by receiving a signal due to exceeding the preset threshold value (for example, 2000A).

On the other hand, the monitoring unit 11 monitors the electrical connection state between the output of the threshold value detection unit 10 (the comparator 10b) and the heater ignition unit 201 of the pyroswitch 200. Specifically, the monitoring unit 11 monitors whether or not the current output from the threshold value detection unit 10 (the comparator 10b) flows to the heater ignition unit 201. This makes it possible to confirm whether or not a disconnection occurs in the wiring between the output of the threshold value detection unit 10 (the comparator 10b) and the heater ignition unit 201 of the pyroswitch 200. Thus, the content monitored by the monitoring unit 11 is output from the monitoring unit 11 to the CAN communication unit 12. The current output from the threshold value detection unit 10 (the comparator 10b) is a minute current to such an extent that it does not activate the heater ignition unit 201.

On the other hand, the CAN communication unit 12 is a communication unit using a CAN (Controller Area Network) as a communication protocol, and receives the content output from the monitoring unit 11. The CAN communication unit 12 transmits the received content to a vehicle ECU (Electronic Control Unit) that controls each part of the vehicle.

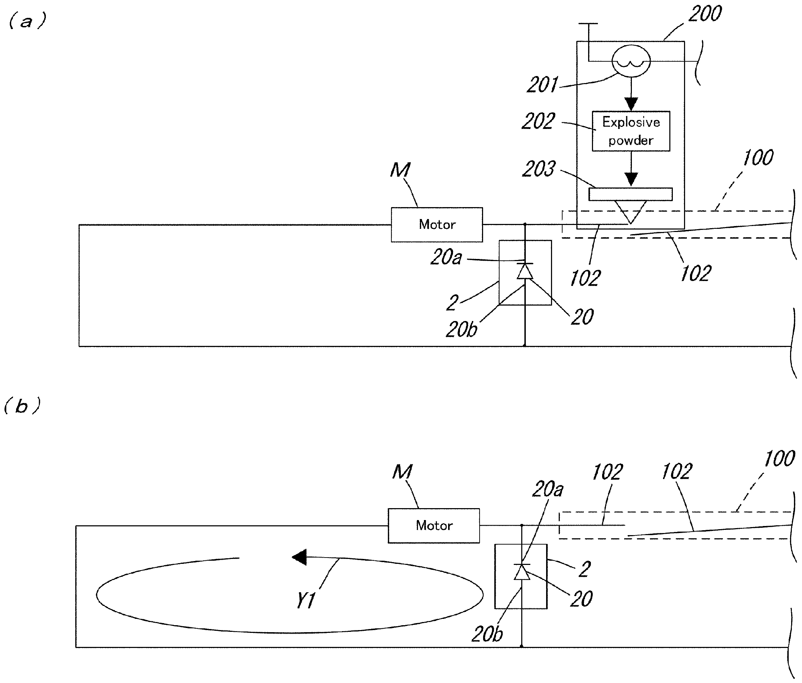

The suppression unit 2 suppresses energy generated by cutting the base member 102 of the shunt resistor 100 by a cutting unit 203 of the pyroswitch 200 (see FIG. 2). Specifically, as shown in FIG. 1, the suppression unit 2 is composed of a diode 20. The diode 20 has a cathode side 20a connected between the base member 102 of the shunt resistor 100 and the motor M and has an anode side 20b connected to the motor M.

Thus, the system configured as above is used as follows.

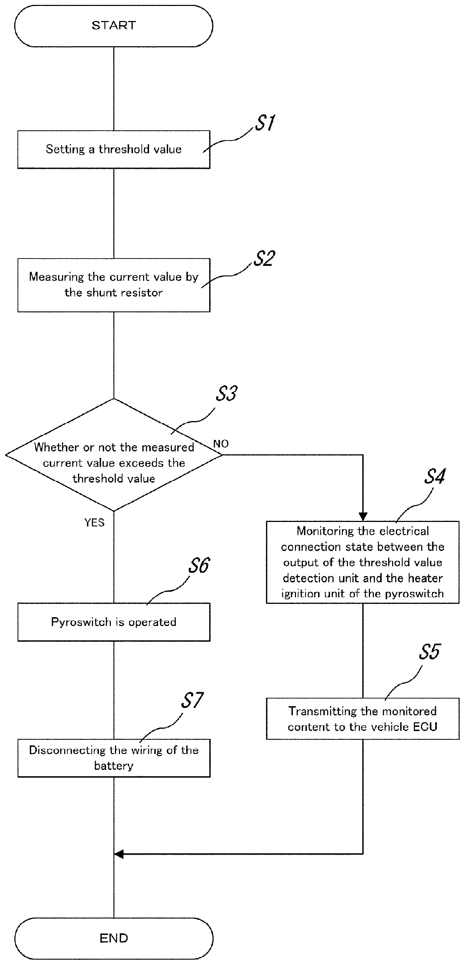

As shown in FIG. 3, first, a threshold value (for example, 2000A) is set in the comparator 10b of the threshold value detection unit 10 (step S1).

Next, when the current I (see FIG. 1) flows from the battery B to the motor M, the current value is measured by the shunt resistor 100 (step S2).

Next, the current value measured by the shunt resistor 100 is amplified by the amplifier 10a, and whether or not the amplified current value exceeds the preset threshold value (for example, 2000A) is detected by the comparator 10b (step S3).

When the threshold value is not exceeded (step S3: NO), the electrical connection state between the output of the threshold value detection unit 10 (the comparator 10b) and the heater ignition unit 201 of the pyroswitch 200 is monitored by the monitoring unit 11 (step S4). The content monitored by the monitoring unit 11 is output from the monitoring unit 11 to the CAN communication unit 12 and received by the CAN communication unit 12. As a result, the monitored content is transmitted from the CAN communication unit 12 to the vehicle ECU (step S5).

Thus, this can solve the conventional problem. That is, in the conventional case, the pyroswitch 200 is operated, triggered by a signal from the airbag control device as shown in FIG. 4. Therefore, the signal from the airbag control device cannot be received when a break occurs in the wiring between the heater ignition unit 201 and the signal from the airbag control device, so that the pyroswitch 200 is not operated. Thus, there is a problem that the wiring of the battery B cannot be safely disconnected. Further, there is a problem that such a state cannot be detected.

In this regard, as shown in the present embodiment, the electrical connection state between the output of the threshold value detection unit 10 (the comparator 10b) and the heater ignition unit 201 of the pyroswitch 200 is monitored by the monitoring unit 11 and transmitted to the vehicle ECU through the CAN communication unit 12, whereby the electrical connection state can be constantly monitored. Accordingly, it is possible to confirm whether or not a break occurs in the wiring between the output of the threshold value detection unit 10 (the comparator 10b) and the heater ignition unit 201 of the pyroswitch 200. This can solve the problem that the pyroswitch 200 does not operate without noticing the occurrence of a break as in the conventional case, and thus the wiring of the battery B can be disconnected more safely. Further, the occurrence of a break in the vehicle ECU can be detected at an early stage by transmitting the monitored content to the vehicle ECU that controls each part of the vehicle, and thus, the occurrence of a malfunction can be notified at an early stage.

On the other hand, when the threshold value is exceeded (step S3: YES), a signal indicating that the threshold value has been exceeded is output from the threshold value detection unit 10 (the comparator 10b), and the signal is received by the heater ignition unit 201. In response thereto, the heater ignition unit 201 is activated. As a result, explosive powder 202 is exploded, and the exploded explosive powder 202 causes the cutting unit 203 to operate (step S6). When the cutting unit 203 is operated, the base member 102 of the shunt resistor 100 is cut by the cutting unit 203 as shown in FIG. 2(a), so that the wiring of the battery B is disconnected (step S7).

Thus, in this manner, when the pyroswitch 200 is configured to be operated because the current value measured by the shunt resistor 100 exceeds the threshold value, the conventional problem can be solved. That is, in the conventional case, as shown in FIG. 4, the pyroswitch 200 is operated when receiving a signal from the airbag control device even if damage such as a disconnection and a short circuit of the wiring of the battery B does not occur at the time of a vehicle accident, so that the base member 102 of the shunt resistor 100 is cut. As a result, there is a problem that electric power is not supplied to the motor M, etc., due to the loss of the entire power source supplied from the battery B, whereby, for example, the door of the vehicle cannot be opened and thus an occupant cannot get out of the vehicle.

In this regard, as shown in the present embodiment, when the pyroswitch 200 is configured to be operated because the current value measured by the shunt resistor 100 exceeds the threshold value, it is not possible to operate the pyroswitch 200 when no damage such as a disconnection and a short circuit of the wiring of the battery B occurs (if no damage such as a disconnection and a short circuit of the wiring of the battery B occurs, the threshold value (for example, 2000A) is never exceeded). Therefore, the problem can be solved that electric power is not supplied to the motor M, etc., due to the loss of the entire power source supplied from the battery B, whereby, for example, the door of the vehicle cannot be opened and an occupant cannot get out of the vehicle.

Further, as shown in the present embodiment, since the current detection sensor 1 (the threshold value detection unit 10) detects that the current value measured by the shunt resistor 100 has exceeded the threshold value, the current detection sensor 1 (the threshold value detection unit 10) is located in the vicinity of the shunt resistor 100, and since the shunt resistor 100 is cut by the pyroswitch 200, the pyroswitch 200 is located in the vicinity of the shunt resistor 100. Accordingly, the current detection sensor 1 (the threshold value detection unit 10) is provided in the vicinity of the pyroswitch 200. As a result, signal wiring indicating that the current value measured by the shunt resistor 100 has exceeded the threshold value is located in the vicinity of the pyroswitch 200. Thus, the situation where the signal from the airbag control device (see FIG. 4) is damaged at the time of a vehicle accident as in the conventional case can be reduced. Accordingly, the situation where the pyroswitch 200 is not operated and then the wiring of the battery B cannot be safely disconnected as in the conventional case can be reduced.

Thus, according to the present embodiment, the wiring of the battery B can be disconnected more safely using the pyroswitch 200.

Meanwhile, as shown in FIG. 4(b), there is a problem that when the base member 102 of the shunt resistor 100 is cut by the pyroswitch 200 to disconnect the wiring of the battery B, energy stored in inductance which the wiring of the battery B and components have may cause a high voltage, resulting in sparks, and lead to destruction and burnout of the battery B and peripheral devices.

Accordingly, in the present embodiment, the suppression unit 2 for suppressing energy generated by cutting the base member 102 of the shunt resistor 100 by the cutting unit 203 of the pyroswitch 200 (see FIG. 2) is provided. That is, when the base member 102 of the shunt resistor 100 is cut by the cutting unit 203 as shown in FIG. 2(a), triggered by a signal output from the threshold value detection unit 10 (the comparator 10b) and indicating that the threshold value is exceeded, the energy stored in the inductance which the wiring of the battery B and the components have causes a high voltage on the motor M side. Therefore, the current flows back in the direction of arrow Y1 as shown in FIG. 2(b) by providing the suppression unit 2 on the motor M side. As a result, the energy generated by cutting the base member 102 of the shunt resistor 100 by the cutting unit 203 of the pyroswitch 200 (see FIG. 2) can be suppressed. Thus, according to the present embodiment, the situation where the energy stored in the inductance which the wiring of the battery B and the components have causes a high voltage, resulting in sparks, and leads to destruction and burnout of the battery B and peripheral devices as in the conventional case can be reduced. As a result, the system itself shown in the present embodiment can be protected.

Thus, according to the present embodiment, the energy generated when the wiring of the battery B is disconnected using the pyroswitch 200 can be suppressed.

Further, by configuring the suppression unit 2 with the diode 20, it is only necessary to connect the cathode side 20a of the diode 20 between the base member 102 of the shunt resistor 100 and the motor M and to connect the anode side 20b to the motor M. Therefore, the suppression unit 2 can be configured with a simple circuit configuration.

It is noted that the current detection sensor 1 shown in the present embodiment is merely an example, and various modifications and changes are possible without departing from the spirit and scope of the present invention as defined in the appended claims. For example, the example composed of the amplifier 10a and the comparator 10b as the threshold value detection unit 10 is shown, but without being limited thereto, the threshold value detection unit 10 may be composed only of the comparator 10b. Further, the threshold value detection unit 10 may have any circuit configuration as long as it compares the current value of the current I flowing from the battery B to the motor M having been measured by the shunt resistor 100 with the preset threshold value (for example, 2000A).

Further, in the present embodiment, the example in which the current value of the current I flowing from the battery B to the motor M is measured by the shunt resistor 100 is shown, but without being limited thereto, it may be configured to measure, by the shunt resistor 100, the current value of current flowing from the battery B to other load units other than the motor M.

On the other hand, in manufacturing the current detection sensor 1 and the pyroswitch 200, they may be manufactured separately or may be manufactured integrally. When manufactured integrally, they can be made compact and the installation space can be reduced.

On the other hand, in the present embodiment, as a trigger for operating the pyroswitch 200, the signal due to exceeding the preset threshold value (for example, 2000A) is used as the trigger. However, a signal from the airbag control device may be used together with the signal.

On the other hand, the suppression unit 2 can be applied also to the conventional system shown in FIG. 4 in addition to the system described above. Reference Signs List

- 1: Current detection sensor
- 2: Suppression unit
- 10: Threshold value detection unit
- 11: Monitoring unit
- 12: CAN communication unit (transmission unit)
- 20: Diode
- 20a: Cathode side
- 20b: Anode side
- 100: Shunt resistor
- 200: Pyroswitch
- B: Battery
- M: Motor (load unit)

## Claims

1. A current cutoff system, including:
a shunt resistor (100) for measuring a value of current flowing from a battery (B) to a load unit (M);
a threshold value detection unit (10) for detecting whether or not the current value measured by the shunt resistor (100) exceeds a preset threshold value; and
a pyroswitch (200) for cutting the shunt resistor (100) when the threshold value detection unit (10) detects that the threshold value is exceeded,
the pyroswitch (200) comprising a heater ignition unit (201);
an output of a comparator (10b) of the threshold value detection unit (10) and the heater ignition unit (201) being electrically connected;
the current cutoff system further including:
a monitoring unit (11) for monitoring between the output of the threshold value detection unit (10) and the heater ignition unit (201) of the pyroswitch (200) whether or not current output from the threshold value detection unit (10) flows to the heater ignition unit (201) of the pyro switch (200); and
a transmission unit (12) for transmitting content monitored by the monitoring unit (11) to a vehicle ECU.

## Patentansprüche

1. Stromabschaltsystem, einschließend:
einen Shunt-Widerstand (100) zum Messen eines Werts von Strom, der von einer Batterie (B) zu einer Ladeeinheit (M) fließt;
eine Schwellenwert-Erkennungseinheit (10) zum Erkennen, ob der vom Shunt-Widerstand (100) gemessene Stromwert einen voreingestellten Schwellenwert überschreitet oder nicht; und
einen Pyroschalter (200) zum Abschneiden des Shunt-Widerstands (100), wenn die Schwellwert-Erkennungseinheit (10) erkennt, dass der Schwellwert überschritten ist,
wobei der Pyroschalter (200) eine Heizungszündeinheit (201) umfasst;
wobei ein Ausgang eines Komparators (10b) der Schwellenwert-Erkennungseinheit (10) und der Heizungszündeinheit (201) elektrisch verbunden sind;
das Stromabschaltsystem weiter einschließend:
eine Überwachungseinheit (11) zum Überwachen zwischen dem Ausgang der Schwellenwert-Erkennungseinheit (10) und der Heizungszündeinheit (201) des Pyroschalters (200), ob von der Schwellenwert-Erkennungseinheit (10) ausgegebener Strom zur Heizungszündeinheit (201) des Pyroschalters (200) fließt oder nicht; und
eine Übertragungseinheit (12) zum Übertragen von von der Überwachungseinheit (11) überwachtem Inhalt an eine Fahrzeug-ECU.

## Revendications

1. Système de coupure de courant, incluant :
une résistance de dérivation (100) pour mesurer une valeur de courant circulant d'une batterie (B) à une unité (M) de charge ;
une unité (10) de détection de valeur seuil pour détecter si la valeur de courant mesurée par la résistance de dérivation (100) dépasse ou non une valeur seuil prédéfinie ; et
un pyrocommutateur (200) pour couper la résistance de dérivation (100) lorsque l'unité (10) de détection de valeur seuil détecte un dépassement de la valeur seuil,
le pyrocommutateur (200) comprenant une unité (201) d'allumage de dispositif de chauffage ;
une sortie d'un comparateur (10b) de l'unité (10) de détection de valeur seuil et de l'unité (201) d'allumage de dispositif de chauffage étant raccordée électriquement ;
le système de coupure de courant incluant en outre :
une unité (11) de surveillance pour surveiller entre la sortie de l'unité (10) de détection de valeur seuil et de l'unité (201) d'allumage de dispositif de chauffage du pyrocommutateur (200) si une sortie de courant de l'unité (10) de détection de valeur seuil circule ou non jusqu'à l'unité (201) d'allumage de dispositif de chauffage du pyrocommutateur (200) ; et
une unité (12) de transmission pour transmettre le contenu surveillé par l'unité (11) de surveillance à une unité de commande électronique de véhicule.
